# EUROPÄISCHE PATENTSCHRIFT

(11) **EP 3 065 990 B1**
(45) Veröffentlichungstag und Bekanntmachung des Hinweises auf die Patenterteilung: **25.12.2019**
(21) Anmeldenummer: 14700856.9
(22) Anmeldetag: 15.01.2014
(51) Int. Cl.: B61C 17/04

(54) **FUSSPODEST UND ARBEITSTISCH MIT EINEM FUSSPODEST**
FOOT PLATFORM AND DESK COMPRISING A FOOT PLATFORM
REPOSE-PIED ET TABLE DE TRAVAIL MUNI D'UN REPOSE-PIED

(43) Veröffentlichungstag der Anmeldung: 14.09.2016
(73) Patentinhaber: Siemens Mobility GmbH, 81739 München (DE)
(72) Erfinder: SCHEURER, Christian, 70771 Leinfelden-Echterdingen (DE); TISCHLER, Georg, 04158 Leipzig (DE); MEHLAN, Markus, 80992 München (DE)
(86) Internationale Anmeldenummer: PCT/EP2014/050688
(87) Internationale Veröffentlichungsnummer: WO 2015/106807

(56) Entgegenhaltungen:
- EP-A1- 0 008 753
- DE-A1- 2 941 894
- DE-B3-102012 216 561
- DE-C1- 19 615 532
- DE-U1- 20 000 612
- US-A1- 2012 112 035
- US-A1- 2013 220 168

## Beschreibung

Aus der deutschen Gebrauchsmusterschrift DE 200 00 612 U1 ist ein Sitzmöbel mit einem Hocker bekannt. Der Hocker weist die Merkmale des Oberbegriffs des Patentanspruchs 1 auf.

Aus der Internet-Veröffentlichung "http://www.chv-verkehrstechnik.de/de/leistungsangebot/fusspodeste.html" ist ein mechanisches Fußpodest bekannt, das hinsichtlich seiner Füßeabsetzplatte durch eine Gasfeder angetrieben ist und das eine Fernbetätigungseinrichtung aufweist, jedoch handelt es sich bei diesem bekannten Fußpodest um ein Podest mit einer schlittenartig unter Einsatz eines Stirnradgetriebes verstellbaren Füßeabsetzplatte.

Für Arbeitsplätze, an denen eine Bedienungsperson arbeitsbedingt für eine längere Zeitdauer ununterbrochen auf einem Sitz verweilen muss, ist es wichtig, solche Arbeitsplätze so auszugestalten, dass sie ergonomisch optimal für die jeweilige Bedienungsperson eingerichtet sind. Zu einer solchen Ausrüstung gehört eine Möglichkeit zur Höhenanpassung des Sitzes, so dass sich die jeweilige Bedienungsperson in eine zur Verrichtung einer Arbeit oder einer Bedienung einer Anlage oder eines Fahrzeugs optimale Position versetzen kann. Eine Besonderheit bei Plätzen zum Führen von Fahrzeugen ist, dass neben den ergonomischen Anforderungen auch die Sicht ins Freie Anforderungen unterliegt. Der Bezug zwischen Augen des Fahrzeugführers und Fenstern, die den Blick ins Freie ermöglichen, ist nicht frei wählbar. Als Folge kann die Sitzhöhe und die Höhe des Bedienpults nicht beliebig verändert werden.

Zu einer besonders gut ergonomisch ausgestatteten Ausrüstung des Arbeitsplatzes gehört häufig auch ein Fußpodest. Insbesondere bei Arbeitsplätzen mit wechselnder Besetzung ist dieses in einfacher Ausführung unzureichend, weil Menschen unterschiedlich lange Beine haben. Deshalb sind Fußpodeste häufig so ausgerüstet, dass sie von der jeweiligen Bedienungsperson individuell einstellbar sind.

So ist es bekannt, ein Fußpodest für den Führerstand in einem Schienenfahrzeug mit einer schwenkbaren Füßeabsetzplatte auszurüsten, die in einer Schwenkposition, die zu der jeweiligen Bedienungsperson passt, von Hand eingestellt werden kann. Ein ähnliches Fußpodest ist durch die EP-A1-0 008 753 bekannt.

Dies hat den Nachteil, dass sich die jeweilige Bedienungsperson ihre optimale Schwenkposition der Füßeabsetzplatte merken muss, um nach einer Arbeitsaufnahme im Führerstand das Fußpodest entsprechend einzustellen, oder probieren muss, bis eine optimale Schwenkposition der Füßeabsetzplatte erreicht ist.

Der Erfindung liegt die Aufgabe zu Grunde, ein Fußpodest vorzuschlagen, das mit einfachen Mitteln bequem optimal einstellbar ist.

Zur Lösung dieser Aufgabe ist ein Fußpodest mit den Merkmalen gemäß Patentanspruch 1 vorgesehen.

Ein wesentlicher Vorteil des erfindungsgemäßen Fußpodestes wird darin gesehen, dass es mit einfachen Mitteln komfortabel betätigt werden kann, weil durch Betätigung der fernbetätigbaren Arretiereinrichtung die Wirkung der Feder auf die Füßeabsetzplatte freigegeben wird, wodurch die Füßeabsetzplatte soweit nach oben schwenkt, bis sie durch die Füße der jeweiligen Bedienungsperson in der gewünschten, optimalen Schwenkposition festgehalten wird; durch Freigabe der Arretiereinrichtung wird die Füßeabsetzplatte anschließend in dieser Schwenkposition festgelegt. Diese Prozedur ist so wenig anspruchsvoll, dass sie von einer Bedienungsperson ohne wesentliche Ablenkung auch während der eigentlichen Tätigkeit durchgeführt werden kann. Außerdem benötigt das erfindungsgemäße Fußpodest keine Hilfsenergie.

Bei dem erfindungsgemäßen Fußpodest kann die Feder unterschiedlich ausgebildet sein; als besonders vorteilhaft wird es angesehen, wenn die Feder eine Gasfeder ist.

Das Verriegelungselement kann nach Art eines Schnappers oder als federbelasteter Stößel ausgeführt sein.

Als vorteilhaft erscheint es ferner, die Lochplatte seitlich neben der Füßeabsetzplatte an dem Gehäuse anzubringen, weil dies mit einem relativ geringen konstruktiven Aufwand zu verwirklichen ist.

Ferner kann es vorteilhaft sein, wenn die Rastmittel einen Reibbelag aufweisen, der in Schwenkrichtung der Füßeabsetzplatte an dem Gehäuse befestigt ist, und die Arretiereinrichtung ein federbelastetes Reibelement in einer derartiges Anordnung ist, dass es von der Seite her gegen den Reibbelag führbar ist.

Die Arretiereinrichtung des erfindungsgemäßen Fußpodestes weist vorteilhafterweise einen Bowdenzug auf, weil Bowdenzüge weit verbreitet sind und daher kostengünstig eingesetzt werden können.

Die Erfindung betrifft ferner einen Arbeitstisch eines Arbeitsplatzes mit einem Fußpodest und stellt sich die Aufgabe, einen solchen Arbeitstisch hinsichtlich des Fußpodestes so auszugestalten, dass das Fußpodest in der Sitzposition einer Bedienungsperson in bequemer Weise in der jeweils gewünschten Position hinsichtlich der Füßeabsetzplatte einstellbar ist.

Zur Lösung dieser Aufgabe ist erfindungsgemäß das oben beschriebene Fußpodest unterhalb des Arbeitstisches positioniert und die Arretierungseinrichtung ist an ihrem von der Füßeabsetzplatte angewendeten Ende an dem Arbeitstisch leicht zugänglich befestigt.

Vorteilhaft ist dieser Arbeitstisch insofern, als eine Bedienungsperson in einer eingenommenen Sitzposition das Fußpodest in einfacher Weise durch Betätigung der Arretiereinrichtung unter der Wirkung der Feder in eine jeweils optimale Schwenkposition einstellen kann, was ohne Arbeitsunterbrechung und ohne nennenswerte Ablenkung von der Arbeit erfolgen kann.

Der erfindungsgemäße Arbeitstisch kann an unterschiedlichen Arbeitsplätzen zum Einsatz gelangen, so auch bei Bedienplätzen von Fahrzeugen unterschiedlicher Art. Als besonders vorteilhaft wird es angesehen, wenn der Arbeitstisch das Bedienungspult eines Führerstand eines Schienenfahrzeugs ist und das Fußpodest am Boden des Führerstands befestigt ist sowie die Arretiereinrichtung mit ihrem von dem Fußpodest abgewendeten Ende seitlich vorn im oberen Bereich einer das Fußpodest aufnehmenden Nische des Bedienungspults befestigt ist.

Zur weiteren Erläuterung der Erfindung ist in
- Figur 1: eine Schrägansicht auf ein Ausführungsbeispiel eines Arbeitstisches in Form eines Bedienungspults im Führerstand eines Schienenfahrzeugs mit einem Ausführungsbeispiel des erfindungsgemäßen Fußpodests, in
- Figur 2: eine weitere Ansicht des Arbeitstisches nach Figur 1 mit abgenommenen Wandverkleidungen in einer Nische des Arbeitstisches, in

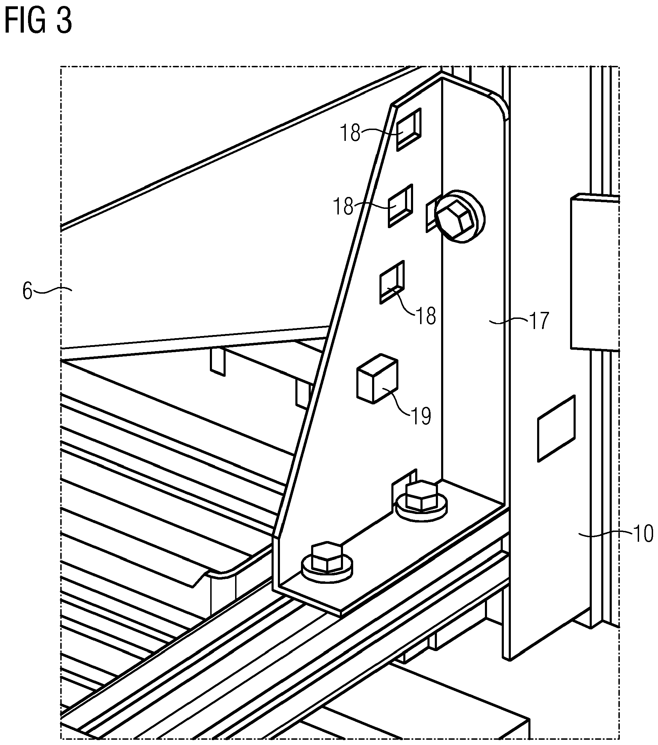

- Figur 3: eine Schrägansicht auf eine Lochplatte der Rastmittel und in
- Figur 4: eine Seitenansicht auf dasselbe Ausführungsbeispiels des Fußpodests gezeigt.

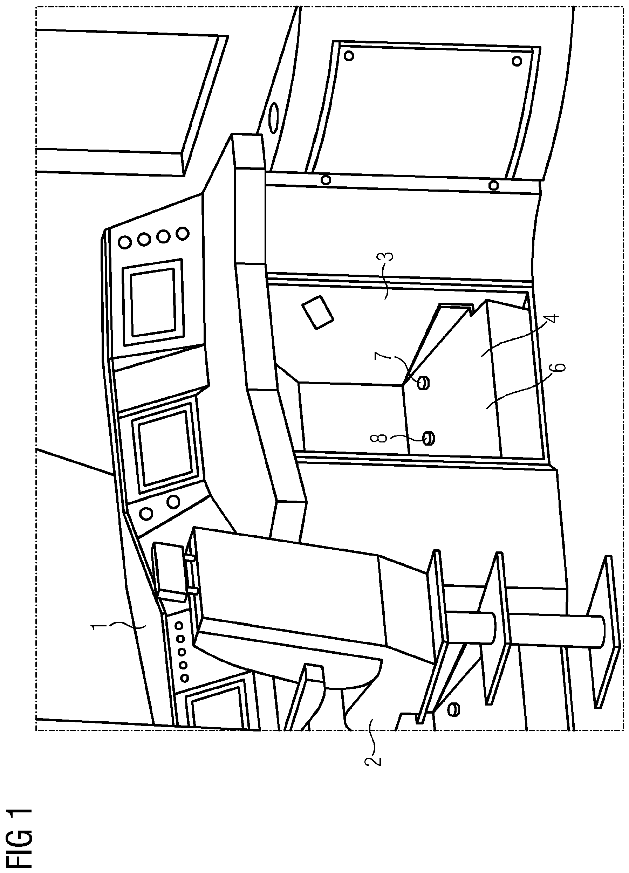

Bei dem in Figur 1 gezeigten Ausführungsbeispiel eines erfindungsgemäßen Arbeitstisches handelt es sich um ein Bedienungspult 1 eines im Übrigen nicht dargestellten Schienenfahrzeugs. Wie die Figur 1 im Einzelnen zeigt, ist das Bedienungspult mit zwei Arbeitsplätzen ausgerüstet, zu denen jeweils ein Sitz 2 gehört; zur Gewinnung eines besseren Einblicks ist der an dem in der Figur 1 rechten Arbeitsplatz befindliche Sitz entfernt. Jeder Arbeitsplatz ist mit einer Nische 3 versehen, die sich unterhalb des Arbeitspultes 1 befindet. In der Nische 3 ist ein Fußpodest 4 untergebracht bzw. befestigt.

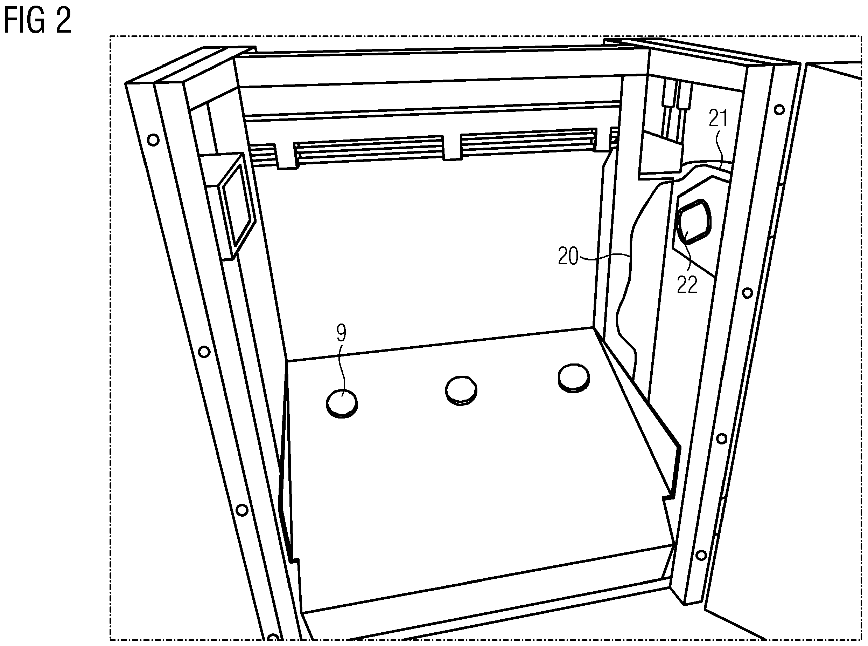

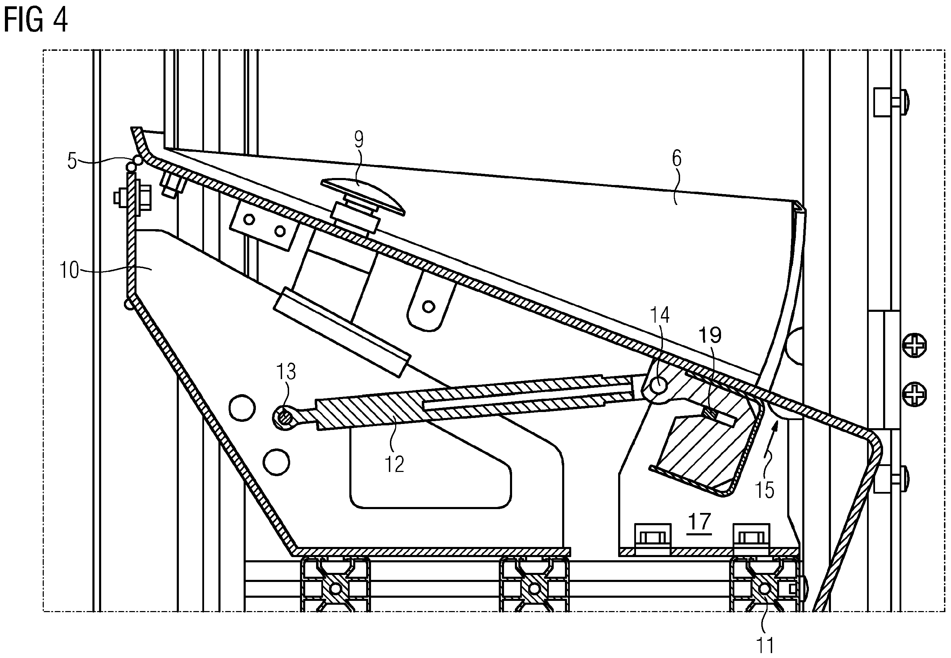

Das Fußpodest 4 weist eine schwenkbar mittels eines Scharniers 5 (siehe Fig.4) angeordnete Füßeabsetzplatte 6 auf. Die Füßeabsetzplatte 6 ist mit mehreren Betätigungsschaltern 7 und 8 sowie 9 (vgl. Fig.2) in Form von Fußschaltern ausgerüstet.

Wie insbesondere Figur 4 zeigt, weist das Fußpodest 4 ein Gehäuse 10 auf, das in seinem unteren Bereich an einer Schiene 11 des Schienenfahrzeugs befestigt ist. Wie die Figur 4 ferner zeigt, ist unterhalb der Füßeabsetzplatte 6 eine Gasfeder 12 am Gehäuse 10 mit ihrem einen Ende 13 schwenkbar befestigt; ein anderes Ende 14 der Gasfeder 12 greift unten an der Füßeabsetzplatte 6 an und übt somit auf die Füßeabsetzplatte 6 ein Drehmoment in Richtung des Pfeiles 15 aus.

Um die Wirkung der Gasfeder 12 zu kontrollieren, ist seitlich neben der Füßeabsetzplatte 6 eine Lochplatte 17 mit mehreren Löchern 18 am Gehäuse 10 in Richtung der Schwenkbewegung der Füßeabsetzplatte 6 befestigt, liegt also neben der Füßeabsetzplatte 6. In diese Löcher 18 kann ein in der Figur 4 nur schematisch dargestelltes, federbelastetes Verriegelungselement 19 einer Arretiereinrichtung eingreifen, um die Füßeabsetzplatte 6 in einer gefundenen, optimalen Position zu arretieren.

Das Verriegelungselement 19 kann Bestandteil einer in Form eines Bowdenzuges 20 ausgeführten Arretiereinrichtung sein, wie Figur 2 zeigt. Dabei ist der Bowdenzug 20 an seinem von der Füßeabsetzplatte 6 entfernten Ende 21 mit einer Betätigungseinrichtung 22 verbunden, die hier als Schalthebel ausgeführt ist.

## Patentansprüche

1. Fußpodest (4) mit
- einem schwenkbar gelagerten Fußabsetzelement, das sich an seiner Unterseite auf einer Feder (12) abstützt, mit
- mechanischen Rastmitteln (17) zur Arretierung des Fußabsetzelements in einer Schwenkposition, und
- einer fern betätigbaren mechanischen Arretiereinrichtung (19) an dem Fußabsetzelement zum Eingriff in die mechanischen Rastmittel (17),
**dadurch gekennzeichnet, dass**
- das Fußabsetzelement eine Füßeabsetzplatte (6) ist, die schwenkbar an einem Gehäuse (10) des Fußpodests (4) gelagert ist,
- die Rastmittel eine Lochplatte (17) aufweisen, die in Schwenkrichtung der Füßeabsetzplatte (6) an dem Gehäuse (10) befestigt ist, und
- die Arretiereinrichtung ein federbelastetes Verriegelungselement (19) in einer derartigen Anordnung an der Füßeabsetzplatte (6) enthält, dass es von der Seite her in die Löcher (18) der Lochplatte (17) einführbar ist.

2. Fußpodest nach Anspruch 1,
**dadurch gekennzeichnet, dass**
die Feder eine Gasfeder (12) ist.

3. Fußpodest nach Anspruch 1 oder 2,
**dadurch gekennzeichnet, dass**
die Lochplatte (17) seitlich neben der Füßeabsetzplatte (6) an dem Gehäuse (10) angebracht ist.

4. Fußpodest nach einem der voranstehenden Ansprüche,
**dadurch gekennzeichnet, dass**
die Rastmittel einen Reibbelag aufweisen, der in Schwenkrichtung der Füßeabsetzplatte an dem Gehäuse befestigt ist, und die Arretiereinrichtung ein federbelastetes Reibelement in einer derartiges Anordnung ist, dass es von der Seite her gegen den Reibbelag führbar ist.

5. Fußpodest nach einem der voranstehenden Ansprüche,
**dadurch gekennzeichnet, dass**
die Arretiereinrichtung einen Bowdenzug (20) weist.

6. Arbeitstisch (1) eines Arbeitsplatzes mit einem Fußpodest (4) nach einem der vorangehenden Ansprüche,
**dadurch gekennzeichnet, dass**
das Fußpodest (4) unterhalb des Arbeitstisches (1) positioniert ist und die Arretiereinrichtung (22) an ihrem von der Füßeabsetzplatte abgewendeten Ende an dem Arbeitstisch (1) leicht zugänglich befestigt ist.

7. Arbeitstisch nach Anspruch 6,
**dadurch gekennzeichnet, dass**
der Arbeitstisch das Bedienungspult (1) eines Führerstands eines Schienenfahrzeugs ist und
das Fußpodest (4) am Boden des Führerstands befestigt ist und die Arretiereinrichtung (22) mit ihrem von dem Fußpodest (4) abgewendeten Ende (21) seitlich vorn im oberen Bereich einer das Fußpodest (4) aufnehmenden Nische (3) des Bedienungspults (1) befestigt ist.

## Claims

1. Foot platform (4) with
- a pivotably mounted foot rest element, the lower face of said foot rest element being supported by a spring (12), with
- mechanical detent means (17) for locking the foot rest element in a pivot position, and
- a remotely controllable mechanical locking facility (19) on the foot rest element for engaging in the mechanical detent means (17),
**characterised in that**
- the foot rest element is a foot rest plate (6), which is pivotably mounted on a housing (10) of the foot platform (4),
- the detent means have a perforated plate (17) which is fastened to the housing (10) in the pivot direction of the foot rest plate (6), and
- the locking facility has a spring-loaded latching element (19) in such an arrangement on the foot rest plate (6) that it can be inserted into the holes (18) in the perforated plate (17) from the side.

2. Foot platform according to claim 1,
**characterised in that**
the spring is a gas spring (12).

3. Foot platform according to claim 1 or 2,
**characterised in that**
the perforated plate (17) is positioned to the side of the foot rest plate (6) on the housing (10).

4. Foot platform according to one of the preceding claims,
**characterised in that**
the detent means have a friction lining which is fastened to the housing in the pivot direction of the foot rest plate and the locking facility is a spring-loaded friction element in such an arrangement that it can be moved against the friction lining from the side.

5. Foot platform according to one of the preceding claims,
**characterised in that**
the locking facility has a Bowden cable (20).

6. Desk (1) of a workstation with a foot platform (4) according to one of the preceding claims,
**characterised in that**
the foot platform (4) is positioned below the desk (1) and the locking facility (22) is fastened in an easily accessible manner to the desk (1) at its end facing away from the foot rest plate.

7. Desk according to claim 6,
**characterised in that**
the desk is the operating console (1) of a driving position in a rail vehicle and
the foot platform (4) is fastened to the base of the driving position and the locking facility (22) is fastened with its end (21) facing away from the foot platform (4) laterally forward in the upper region of a recess (3) of the operating console (1) accommodating the foot platform (4).

## Revendications

1. Repose-pieds (4) comprenant
- un élément de support de pieds monté de manière pivotante qui prend appui sur un ressort (12) au niveau d'une face inférieure, comprenant
- des moyens d'encliquetage mécaniques (17) destinés à bloquer l'élément de support de pieds dans une position de pivotement, et
- un dispositif de blocage mécanique actionnable à distance (19) au niveau de l'élément de support de pieds destiné à la mise en prise dans les moyens d'encliquetage mécaniques (17),
**caractérisé en ce que**
- l'élément de support de pieds est une plaque de support de pieds (6) qui est montée de manière pivotante au niveau d'un corps (10) du repose-pieds (4),
- les moyens d'encliquetage présentent une plaque à trous (17) qui est fixée au corps (10) dans la direction de pivotement de la plaque de support de pieds (6), et
- le dispositif de blocage contient un élément de verrouillage à effet ressort (19) dans un agencement au niveau de la plaque de support de pieds (6) de telle sorte que l'élément de verrouillage peut être introduit dans les trous (18) de la plaque à trous (17) depuis le côté.

2. Repose-pieds selon la revendication 1,
**caractérisé en ce que**
le ressort est un ressort à gaz (12).

3. Repose-pieds selon la revendication 1 ou 2,
**caractérisé en ce que**
la plaque à trous (17) est installée latéralement près de la plaque de support de pieds (6) au niveau du corps (10).

4. Repose-pieds selon l'une des revendications précédentes,
**caractérisé en ce que**
les moyens d'encliquetage présentent une garniture de friction qui est fixée au corps dans la direction de pivotement de la plaque de support de pieds, et le dispositif de blocage est un élément de friction à effet ressort dans un agencement de telle sorte que l'élément de friction peut être guidé contre la garniture de friction depuis le côté.

5. Repose-pieds selon l'une des revendications précédentes,
**caractérisé en ce que**
le dispositif de blocage présente un câble Bowden.

6. Plan de travail (1) d'un poste de travail comprenant un repose-pieds (4) selon l'une des revendications précédentes,
**caractérisé en ce que**
le repose-pieds (4) est positionné en dessous du plan de travail (1) et le dispositif de blocage (22) est fixé de manière à être facilement accessible à l'extrémité opposée à la plaque à trous au niveau du plan de travail (1).

7. Plan de travail selon la revendication 6,
**caractérisé en ce que**
le plan de travail est le pupitre de commande (1) d'une cabine de conducteur d'un véhicule ferroviaire et
le repose-pieds (4) est fixé sur le sol de la cabine de conducteur et le dispositif de blocage (22) est fixé avec son extrémité (21) opposée au repose-pieds (4) latéralement devant dans la zone supérieure d'une niche (3) du pupitre de commande (1) accueillant le repose-pieds (4).
